# EUROPEAN PATENT SPECIFICATION

(11) **EP 4 029 725 B1**
(45) Date of publication and mention of the grant of the patent: **25.10.2023**
(21) Application number: 22151057.1
(22) Date of filing: 11.01.2022
(51) Int. Cl.: B60N 2/00, B60N 2/02, B60N 2/24, B60N 2/30, B60N 2/62, B64D 11/06

(54) **VARIABLE SIZE SEAT**
SITZ MIT VARIABLER GRÖSSE
SIÈGE DE TAILLE VARIABLE

(30) Priority: 14.01.2021 IT 202100000575
(43) Date of publication of application: 20.07.2022
(73) Proprietor: Geven S.p.A., 80035 Nola (NA) (IT)
(72) Inventor: VENERUSO, Alberto, 80035 Nola (NA) (IT)
(74) Representative: Leone, Mario

(56) References cited:
- US-A1- 2020 108 936
- US-A1- 2020 130 537
- US-B2- 6 752 459

## Description

The present invention relates to a variable size seat, for example a seat with fixed or tilting backrest, in particular of the type suitable to be used arranged on parallel rows of seats adjacent to each other, for example on board vehicles such as aircrafts, trains or road vehicles having, apart from the backrest, a fixed supporting frame and a sitting portion.

In particular, the variable size seat which will be described hereinafter is of the type which comprises a sitting portion which is formed by a first rear portion and a second front portion separated longitudinally, and a positioning mechanism connected to the supporting frame, thereby the sitting portion moves from a first configuration, wherein the rear portion is in a lifted position and the front portion is in a vertical position, to a second configuration, wherein the rear portion is in a lowered position due to the effect of a load which weighs thereupon and the front portion is in a horizontal position, aligned to said rear portion.

As it is known, especially in aeronautical field, the seats reserved for passengers have to comply, on one hand, with strict safety regulations and, on the other hand, with requirements requesting a reduced weight, but in any case they have to provide even a certain level of performances, in particular in terms of comfort.

This type of seat has to allow the users, for example the passengers of an aircraft, to sit down through the space comprised between the row thereto they belongs and the row arranged frontally, facing the rear side of the backrest thereto.

As it is known, an easy entry and an easy exit in the space between the rows is requested not only for obvious comfort reasons, but even for safety reasons, which however would require to move away the rows from each other, thus by reducing the number of available places.

Variable size seats with tilting sitting portion are known, commonly used in the projection rooms but even in other contexts, requiring a certain attention of the user upon sitting and which however do not adapt to uses on transportation means. Generally, they have the sitting portion which can be tilted upwards, and thus the user, in order to be seated, first of all has to align horizontally the sitting portion.

US patent No. 6,752,459 B2 describes a seat of this type, but in which only a front portion of the sitting portion tilts, and downwards, whereas the whole sitting portion can move vertically to implement the alignment of the front portion with the rear portion.

Even in this case, the user cannot seat on the rear portion only, but it is obliged to push this rear portion from top downwards, in case before sitting or exerting thereon his/her weight, to obtain a comfortable sitting position.

European patent application No. EP 1,369,350 A1 describes a variable size seat wherein the sitting portion has an additional extension which moves by translating forward, from a lower region to the fixed portion of the sitting portion.

This reduces the space available in said region and obliges the user to a complex positioning procedure, which could cause some discomfort.

Even German patent No. DE 10 2008 053,140 B3 describes a sitting portion having a sliding front portion, but it can be retracted in a position of smaller overall dimensions by sliding above a fixed portion, thus requiring a user intervention for its final positioning, and making impossible to sit down before this intervention.

US patents No. 7,195,316 B2 and No. 8,894,149 B2 describe a variable size seat wherein the sitting portion is formed by a first rear portion and a second front portion, separated longitudinally, and articulated to one another so that the front portion can be tilted upwards or downwards. However, any positioning mechanism is absent, adjusting the position of the front portion of the sitting portion. An analogous drawback can be found in the seat described in US patent application No. 2005/0062,324 A1.

US patent application No. 2020/0,108,936 A1, instead, describes a variable size seat comprising a sitting portion formed by a first rear portion and a second front portion separated longitudinally, and a positioning mechanism connected to the supporting frame. The user, in order to make that the front portion aligns to the rear portion, has to exert his/her own weight in proximity of the conjunction between seat and backrest, and this imposes the user an unnatural position, which could be source of discomfort, and then a user's motion on the seat could cause the tilting of the front portion downwards without this being desired. In another configuration, the rear portion, when the front portion is folded, has an edge projecting upwards, and which has to be squeezed by the user's weight, but even in this case it is requested that the user assumes an unnatural and potentially uncomfortable position.

The technical problem underlying the present invention is to provide a seat allowing to obviate the drawback mentioned with reference to the known art.

Such problem is solved by a seat as specified in the preamble, characterized in that the positioning mechanism comprises a fixed supporting element, connected to the supporting frame, a movable resting plate, which is positioned between the supporting element and the rear portion of the sitting portion, and a tilting plate, connected to the resting plate by means of one or more levers, which supports said front portion of the sitting portion.

The main advantage of the seat according to the present invention lies in the fact of allowing an increase in the available space for sitting down, by activating a mechanism with a usual sitting position of the user, without obliging him/her to push one of the edges of the rear portion of the sitting portion.

The present invention will be described hereinafter according to a preferred embodiment example, provided by way of example and not for limitative purposes with reference to the enclosed drawings wherein:

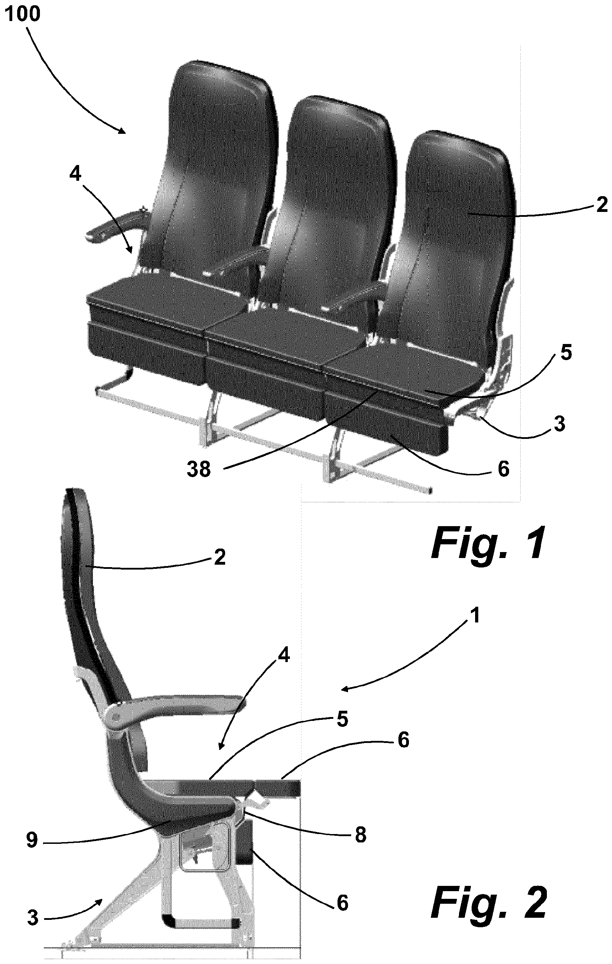

* figure 1 shows an axonometric view of three variable size seats according to the present invention forming a row;
* figure 2 shows a side view of the seats of figure 1;

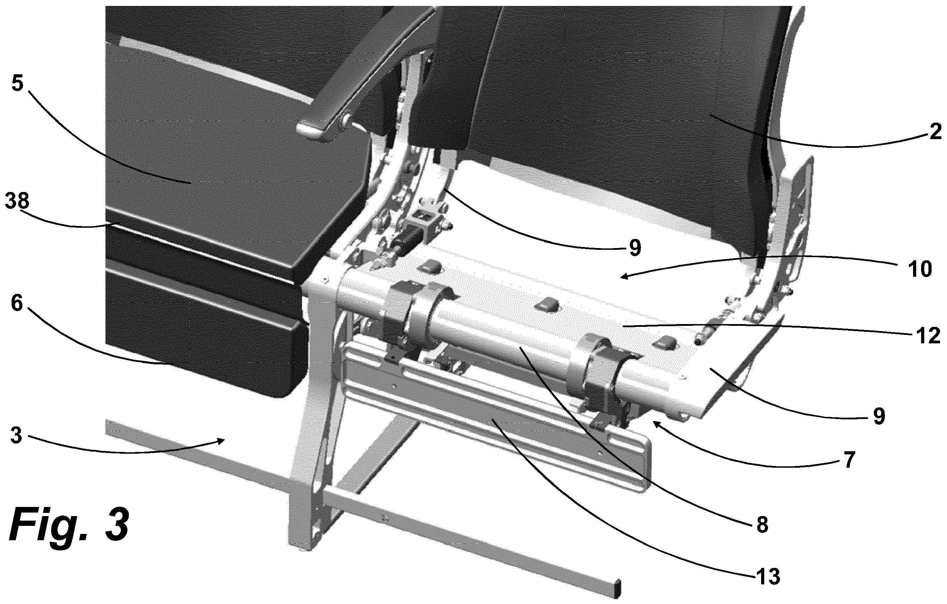

* figure 3 shows an enlarged and in partial section view of a seat of figure 1, illustrating the positioning mechanism of the sitting portion;

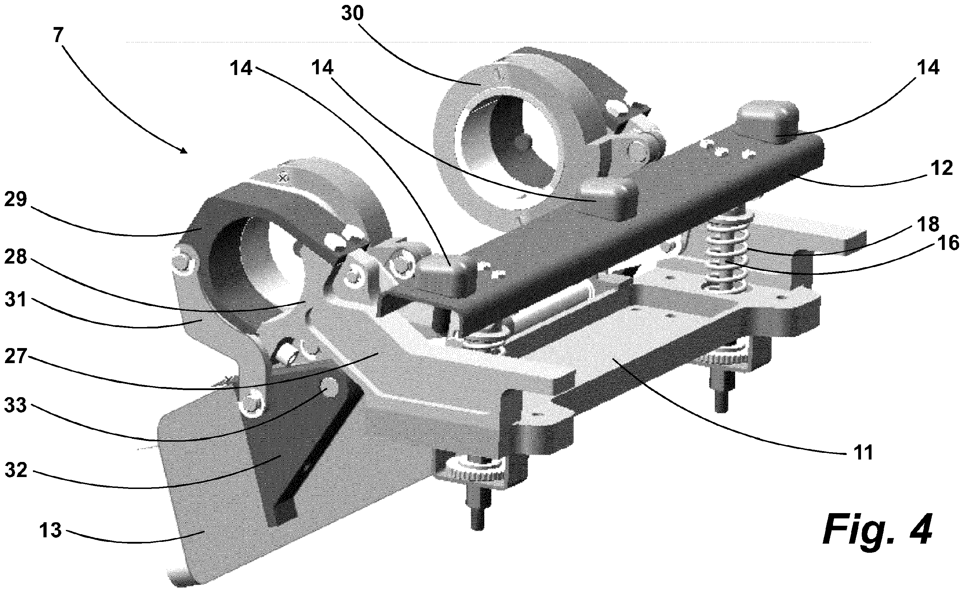

* figure 4 shows a first enlarged axonometric view of the positioning mechanism of figure 3;
* figure 5 shows a second enlarged axonometric view of the positioning mechanism of figure 3;
* figures 6 and 7 show perspective views of a respective detail of the positioning mechanism of figure 4.

With reference to the figures, a row of variable size seats, in particular of the type used on board an aircraft, is designated with 100. It comprises three seats 1 and it is arranged to be positioned in a series of subsequent rows, parallel to each other, each one forming a space, between itself and the row positioned frontally, which is used by the users to access the seats 1 and to rise therefrom.

Each variable size seat 1 comprises a backrest 2, for example of tiltable type, and a supporting frame 3 which, in the present example, is constrained to the aircraft floor.

Moreover, the seat 1 comprises a sitting portion 4 comprising a rear portion 5, which is adjacent to the seat 2, and a front portion 6 which is substantially tiltable. The two portions 5, 6 of the sitting portion 3 are separated longitudinally from each other and they are movable from a first configuration, wherein the seat 1 is not occupied and then there is not a load weighing on the sitting portion 4, in particular on its rear portion 5, to a second configuration, wherein the seat 1 is occupied by a user resting his/her weight on the rear portion 5 of the sitting portion 4.

Below the sitting portion 4, the seat 1 comprises a positioning mechanism 7 of the sitting portion 4, that is of the two portions 5, 6 thereof it consists. The positioning mechanism 7 is connected to a front beam 8 of the frame 3. The front beam 8 forms, with two side arms 9, a resting quadrilateral 10 which substantially has the extension of the rear portion 5 of the sitting portion 4, which is formed by a substantially rectangular flat element.

The positioning mechanism 7 comprises a supporting element 11, connected to the frame 3 and then fixed, a resting plate 12 and a tilting plate 13.

The resting plate 12 is positioned between the supporting element 11 and the rear portion 5 of the sitting portion 4, which is rested thereon. To this purpose, it comprises a number of resting pins 14 projecting from the upper face of the resting plate, which are in contact with the bottom the rear portion 5 of the sitting portion 4.

Two dampers 15 are arranged between the resting plate 12 and the supporting element 11, arranged at the opposite side ends of the resting plate. The two dampers 15 have a stem 16, connected to a damping member 17, which is movable from a lifted position, which corresponds to said first configuration, to a lowered position, which corresponds to said second configuration. The stem 16, in rest position, is kept in lifted position by a first spring 18 of helical type, wound around it.

The stem 16 has an end 19 thereto a swinging fastening cursor 20 is connected, which is connected to the lower face of the resting plate 12. The fastening cursor 20 then is movable from an upper position, which corresponds to said first configuration, to a lower position, which corresponds to said second configuration.

The fastening cursor 20 is connected to a first lever 21 thereto a second lever 22 is hinged the sliding pin thereof 23 is movable inside a groove 24 formed in the first lever 21.

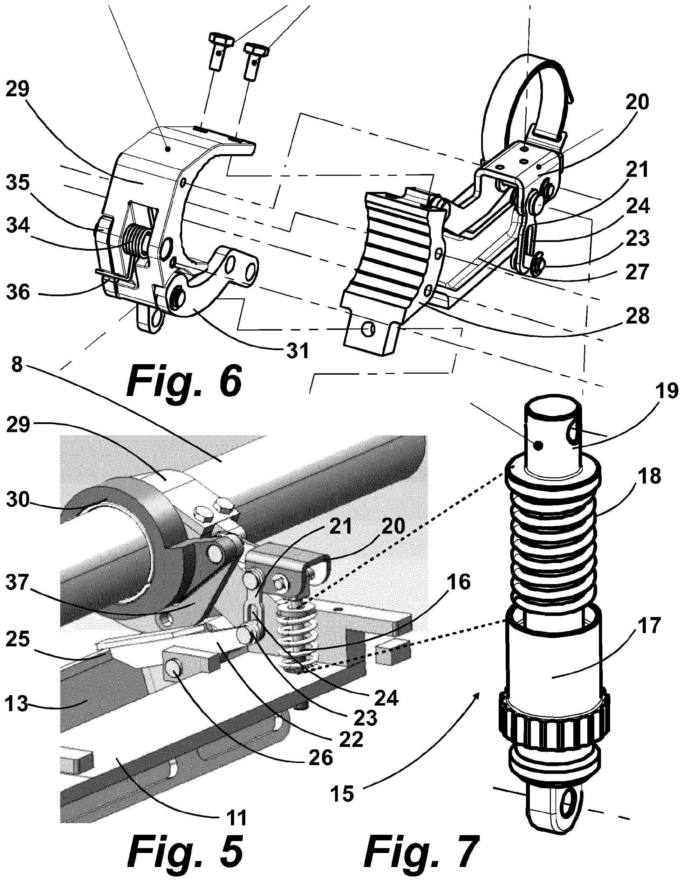

When the cursor 20 lowers starting from the upper position thereof, the first lever 21 lowers, by determining the sliding of the sliding pin 23 in the groove 24; when it reaches the upper stroke end of the groove 24, the second lever 22 is rotated (figure 5), and a stopper distal end thereof 25 moves upwards from a first position, wherein it is rested on an edge of the tilting plate 13, to a second position, wherein the tilting plate 13 is free to rotate.

It is to be noted that the second position is obtained with a delay corresponding to the stroke of the sliding pin 23 in the groove 24. The second lever 22, in turn, swings as it is hinged to a hinge pin 26 integral to the supporting plate 11. Therefore, the first lever 21 is a device which delays the rotation of the front portion 6 of the sitting portion 4.

The device consisting of the combination of the first and second lever 21, 22 and of the cursor 21 comprises a locking and releasing device, in the positioning mechanism, of the tilting plate 13 and then of the front portion 6 of the sitting portion 4 in a vertical position, which corresponds to said first configuration, thus by preventing it from oscillating freely when the seat is not occupied.

Two respective supporting arms 27 project from the side ends of the supporting element 11, which arms are formed as one piece therewith; the arms 27 comprise respective distal ends 28 which are connected to said horizontal beam 8 of the frame 3, determining the position of the supporting plate 11.

The horizontal beam 8 has a circular section, and, at each arm 27, the positioning mechanism 7 comprises a first collar 29 and a second collar 30.

The first collar 29 is fixed; a third lever 31 is articulated thereto, which lever is connected to the tilting plate 13. The latter has a pair of projecting supports 32 projecting from the lower face of the tilting plate 13 and being revolvingly connected to a fixed hinge 33.

Moreover, the first collar 29 comprises a torsion spring 34 the distal end thereof 36 acts on a small arm 35 integral to the third lever 31.

The second collar 30 instead is a retarder, consisting of a pair of sliding concentric bushes. One of them is connected both to a fourth lever 37 and to the supporting cursor 20.

The fourth lever 37 is arranged to rotate and to push upwards, at the side ends thereof, the tilting plate 13. It is connected to the front portion 6 of the sitting portion 4.

Due to the effect of what described above, the positioning mechanism 7 is arranged so that the positions of the rear portion 5 and of the front portion 6 of the sitting portion 4 are determined from one another. In fact, the sitting portion 4 moves from a first configuration, wherein the rear portion 5 is in a lifted position and the front portion 6 is in a vertical position, to a second configuration, wherein the rear portion 5 is pressed and lowered by the weight of a user who is occupying it, as far as reaching a lowered position in which both portions 4, 5 forming the sitting portion are in a horizontal position, aligned with each other, so that the user does not feel the separation between each other.

Therefore, when a user load weighs upon the rear portion 5 of the sitting portion 4, such weight acts on the projecting pins 14 and on the supporting plate 12, by determining the lowering in opposition to the springs 18 of the dampers 15.

It is to be noted that the rear portion, in this initial configuration, is in a lifted position, determined by the action of the springs of the positioning mechanism, and slightly tilted, since the front edge is rested upon the projecting pins 14, whereas the rear edge connects with the backrest 2.

Such lowering, with a delay which corresponds to a stroke portion of the rear portion 5, determines the release of the tilting plate 13 which, in the first starting configuration, is in a vertical position.

Moreover, the fourth lever 37 is rotated by lifting the tilting plate 13 and the front portion 6 of the sitting portion 4 in horizontal position, in opposition both to the clutch and to the torsion spring 34.

On the contrary, when the user weight ceases to act on the rear portion 5 of the sitting portion 4, the action of the first spring 18 and of the torsion spring 34 brings back the front portion 6 of the sitting portion 4 in vertical position, in opposition to the retarder which also slows down the return of the rear portion 5 of the sitting portion 4 in a lifted position.

It is to be noted that, a reduced and barely perceptible stroke of the rear portion 5 of the sitting portion 4, in particular of its front edge 38, can determine the overturning, in horizontal position, of the front portion 6 of the sitting portion 4 which, in absence of an occupant of the seat 1, remains in vertical position by freeing the front space which is useful to access the seat 1.

The two first springs 18 of the dampers 15 and the torsional spring 34 constitute return elastic means of the rear portion 5 of the sitting portion 4 in a lifted position.

It is further to be noted that the retarder secured by the second collar 30 slows down the stroke both of the rear portion 5 and of the front portion 6 in both directions in which they move.

To the above-described seat a person skilled in the art, with the purpose of satisfying additional and contingent needs, could introduce several additional modifications and variants, however all within the protective scope of the present invention, as defined by the enclosed claims.

## Claims

1. A variable size seat (1), in particular for aircrafts, comprising a backrest (2), a fixed supporting frame (3), a sitting portion (4) which is formed by a first rear portion (5) and by a second front portion (6) separated longitudinally, and a positioning mechanism (7), placed below the sitting portion (4), connected to the supporting frame (3), thereby the sitting portion (4) moves from a first configuration, wherein the rear portion (5) is in a lifted position and the front portion (6) is in a vertical position, to a second configuration, wherein the rear portion (5) is in a lowered position due to the effect of a load which weighing thereupon and the front portion (6) is in a horizontal position, aligned to said rear portion (5), **characterized in that** the positioning mechanism (7) comprises a fixed supporting element (11), connected to the supporting frame (3), a movable resting plate (12), which is positioned between the supporting element (11) and the rear portion (5) of the sitting portion (4), and a tilting plate (13), connected to the resting plate (12) by means of one or more levers, which supports said front portion (6) of the sitting portion (4).

2. The variable size seat (1) according to claim 1, wherein one or more dampers (15) are arranged between the resting plate (12) and the supporting element (11), which dampers have a respective stem (16), connected to a damping member (17), which is movable from a lifted position, which corresponds to said first configuration, to a lowered position, which corresponds to said second configuration, said stem (16) being forced, in a resting position which corresponds to said first configuration, in a lifted position by a corresponding spring (18).

3. The variable size seat (1) according to claim 2, wherein the stem (16) has an upper end (19) thereto a swinging fastening cursor (20) is connected, which is connected to the lower face of the resting plate (12).

4. The variable size seat (1) according to any one of the preceding claims, wherein the positioning mechanism (7) comprises return elastic means of the rear (5) and front (6) portions in the respective positions corresponding to said first configuration when the load weighing on said rear portion (5) ceases.

5. The variable size seat (1) according to any one of the preceding claims, wherein the positioning mechanism (7) comprises a locking and releasing device of the front portion (6) of the sitting portion (4) in a vertical position which corresponds to said first configuration, thus preventing the front portion (6) from oscillating freely when the seat is not occupied.

6. The variable size seat (1) according to claims 3 and 5, wherein said one or more levers comprise a first lever (21), connected to said fastening cursor (20), having a longitudinal groove (24), and a second lever (22) comprising a stopper distal end (25) and which is hinged to said first lever (21) by means of a sliding pin (23) which is movable inside said groove (24), so that the drop of the cursor (20) determines the lowering of the first lever (21) and the sliding of the sliding pin (23) in the groove (24) as far as it reaches an upper stroke end of the groove (24), and the subsequent drop of the cursor (20) causes the rotation of the second lever (22) by moving said distal end (25) upwards from a first position, wherein it is rested on an edge of the tilting plate (13), to a second position, wherein the tilting plate (13) is free to rotate, the second lever (22) constituting said locking and releasing device of the front portion (6) of the sitting portion (4).

7. The variable size seat (1) according to claim 6, wherein said second lever (22) is hinged to a hinge pin (26) connected to the supporting plate (11).

8. The variable size seat (1) according to any one of the preceding claims, wherein the positioning mechanism (7) comprises a retarder slowing down the stroke of the rear (5) and front (6) portions of the sitting portion in both directions.

9. The variable size seat (1) according to any one of the preceding claims, wherein, from the side ends of the supporting element (11) two respective supporting arms 27 project, formed as one piece therewith; having respective distal ends (28) connected to the supporting frame (3) at a horizontal beam thereof (8), so as to determine the position of the supporting plate (11).

10. The variable size seat (1) according to claims 3, 8 and 9, wherein the horizontal beam (8) has a circular section, wherein the tilting plate (13) has a pair of projecting supports (32) projecting from a lower face thereof which are revolvingly connected to a fixed hinge (33), and wherein, at each arm (27), the positioning mechanism (7) comprises:
• a first collar (29), thereto a lever (31) is articulated, connected to the tilting plate (13), which comprises a torsion spring (34) the distal end thereof (36) is on such lever (31); and
• a second collar 30 which consists of a pair of sliding concentric bushes so as to constitute the retarder of the positioning mechanism (7), one of said bushes being connected to the fastening cursor (20) .

11. The variable size seat (1) according to claim 10, wherein the bush connected to the fastening cursor (20) is articulated, by means of an additional lever (37), so that such additional lever (37) is arranged to rotate and to push upwards, at the side ends thereof, the tilting plate (13).

## Patentansprüche

1. Größenveränderlicher Sitz (1), insbesondere für Flugzeuge, aufweisend eine Rückenlehne (2), einen festen Tragrahmen (3), ein Sitzteil (4), das von einem ersten hinteren Teil (5) und einem zweiten vorderen Teil (6) gebildet wird, das in Längsrichtung getrennt ist, und einen Positionierungsmechanismus (7), der unterhalb des Sitzteils (4) angeordnet ist und mit dem Tragrahmen (3) verbunden ist, wodurch sich der Sitzteil (4) von einer ersten Konfiguration, in der sich der hintere Teil (5) in einer angehobenen Position befindet (5) und sich der vordere Teil (6) in einer vertikalen Position befindet, zu einer zweiten Konfiguration bewegt, in der sich der hintere Teil (5) aufgrund der Wirkung einer darauf lastenden Last in einer abgesenkten Position befindet und sich der vordere Teil (6) in einer horizontalen Position befindet, ausgerichtet auf den hinteren Teil (5), **dadurch gekennzeichnet, dass** der Positionierungsmechanismus (7) ein festes Tragelement (11), das an dem Tragrahmen (3) angeordnet ist, eine bewegliche Auflageplatte (12), die zwischen dem Tragelement (11) und dem hinteren Teil (5) des Sitzteils (4) positioniert ist, und eine Kippplatte (13) aufweist, die mit der Auflageplatte (12) verbunden ist, mittels eines oder mehrerer Hebel, die den vorderen Teil (6) des Sitzteils (4) trägt.

2. Größenveränderlicher Sitz (1) nach Anspruch 1, wobei zwischen der Auflageplatte (12) und dem Tragelement (11) ein oder mehrere Dämpfer (15) angeordnet sind, die jeweils einen Schaft (16) aufweisen, der mit einem Dämpfer (15) verbunden ist, der von einer angehobenen Position, die der ersten Konfiguration entspricht, in eine abgesenkte Position, die der zweiten Konfiguration entspricht, bewegbar ist, wobei der Schaft (16) in einer Ruheposition, die der ersten Konfiguration entspricht, durch eine korrespondierende Feder (18) in eine angehobenen Position gezwungen wird.

3. Größenveränderlicher Sitz (1) nach Anspruch 2, wobei der Schaft (16) ein oberes Ende (19) aufweist, mit dem ein schwenkbarer Befestigungsschieber (20) verbunden ist, der mit der Unterseite der Auflageplatte (12) verbunden ist..

4. Größenveränderlicher Sitz (1) nach einem der vorhergehenden Ansprüche, wobei der Positionierungsmechanismus (7) elastische Rückstellmittel des hinteren (5) und vorderen (6) Teils in die jeweiligen Positionen aufweist, die der ersten Konfiguration entsprechen, wenn die Last, die auf dem hinteren Teil (5) lastet, endet.

5. Größenveränderlicher Sitz (1) nach einem der vorhergehenden Ansprüche, wobei der Positionierungsmechanismus (7) eine Verriegelungs- und Freigabevorrichtung des vorderen Teils (6) des Sitzteils (4) in einer vertikalen Position aufweist, die zur ersten Konfiguration korrespondiert, so dass der vordere Teil (6) daran gehindert wird, frei zu schwingen, wenn der Sitz nicht besetzt ist.

6. Größenveränderlicher Sitz (1) gemäß den Ansprüchen 3 und 5, wobei der eine oder die mehreren Hebel einen ersten Hebel (21) aufweisen, der mit dem Befestigungsschieber (20) verbunden ist, aufweisend eine Längsnut (24), und einen zweiten Hebel ( 22) mit einem distalen Stopperende (25), das mittels eines Gleitstifts (23), der in der Nut (24) beweglich ist, am ersten Hebel (21) angelenkt ist, so dass das Absenken des Schiebers (20) das Absenken des ersten Hebels (21) und das Gleiten des Gleitstifts (23) in der Nut (24) bestimmt, bis er ein oberes Hubende der Nut (24) erreicht, und das anschließende Absenken des Schiebers ( 20) die Drehung des zweiten Hebels (22) bewirkt, indem das distale Ende (25) von einer ersten Position, in der es auf einer Kante der Kippplatte (13) aufliegt, in eine zweite Position, in der die Kippplatte (13) frei drehbar ist, nach oben bewegt wird, wobei der zweite Hebel (22) die Verriegelungs- und Freigabevorrichtung des vorderen Teils (6) des Sitzteils (4) bildet.

7. Größenveränderlicher Sitz (1) nach Anspruch 6, wobei der zweite Hebel (22) an einem Scharnierstift (26) angelenkt ist, der mit der Tragplatte (11) verbunden ist.

8. Größenveränderlicher Sitz (1) nach einem der vorhergehenden Ansprüche, wobei der Positionierungsmechanismus (7) einen Retarder aufweist, der den Hub des hinteren (5) und vorderen (6) Teils des Sitzteils in beide Richtungen verlangsamt.

9. Größenveränderlicher Sitz (1) nach einem der vorhergehenden Ansprüche, wobei von den Seitenenden des Tragelements (11) jeweils zwei Tragarme (27) abstehen, die einstückig damit ausgebildet sind; aufweisend jeweilige distale Enden (28), die an einem horizontalen Träger (8) des Tragrahmens (3) angeschlossen sind, um so die Position der Tragplatte (11) zu bestimmen.

10. Größenveränderlicher Sitz (1) gemäß den Ansprüchen 3, 8 und 5, wobei der horizontale Träger (8) einen kreisförmigen Abschnitt aufweist, wobei die Kippplatte (13) ein Paar vorstehender Träger (32) aufweist, die von einer unteren Fläche davon vorstehen, die drehbar mit einem festen Scharnier (33) verbunden sind, und wobei der Positionierungsmechanismus (7) an jedem Arm (27) Folgendes aufweist:
• einen ersten Kragen (29), an dem ein Hebel (31) angelenkt ist, der mit der Kippplatte (13) verbunden ist, der eine Torsionsfeder (34) aufweist, deren distales Ende (36) an diesem Hebel (31) liegt; und
• einen zweiten Kragen (30), der aus einem Paar verschiebbarer konzentrischer Buchsen besteht, um den Retarder des Positionierungsmechanismus (7) zu bilden, wobei eine dieser Buchsen mit dem Befestigungsschieber (20) verbunden ist.

11. Größenveränderlicher Sitz (1) nach Anspruch 10, wobei die mit dem Befestigungsschieber (20) verbundene Buchse mittels eines zusätzlichen Hebels (37) angelenkt ist, so dass solch ein zusätzlicher Hebel (37) zum Drehen und nach oben Drücken der Kipplatte (13) bereitgestellt ist, an den Seitenenden davon.

## Revendications

1. Siège (1) de taille variable, en particulier pour aéronefs, comprenant un dossier (2), un cadre de support (3) fixe, une partie d'assise (4) qui est formée d'une première partie arrière (5) et d'une deuxième partie avant (6) séparées longitudinalement, et un mécanisme de positionnement (7) placé en dessous de la partie d'assise (4), connecté au cadre de support (3), ce qui permet à la partie d'assise (4) de passer d'une première configuration dans laquelle la partie arrière (5) est en position relevée et la partie avant (6) est en position verticale, à une deuxième configuration dans laquelle la partie arrière (5) est en position abaissée sous l'effet d'une charge qui pèse sur elle et la partie avant (6) est en position horizontale alignée sur ladite partie arrière (5), **caractérisé en ce que** le mécanisme de positionnement (7) comprend un élément de support (11) fixe, connecté au cadre de support (3), une plaque d'appui (12) mobile, qui est positionnée entre l'élément de support (11) et la partie arrière (5) de la partie d'assise (4), et une plaque basculante (13) connectée à la plaque d'appui (12) au moyen d'un ou plusieurs leviers qui supportent ladite partie avant (6) de la partie d'assise (4).

2. Siège (1) de taille variable selon la revendication 1, dans lequel un ou plusieurs amortisseurs (15) sont agencés entre la plaque d'appui (12) et l'élément de support (11), lesquels amortisseurs ont une tige (16) respective connectée à un organe d'amortissement (17) que l'on peut faire passer d'une position relevée qui correspond à ladite première configuration à une position abaissée qui correspond à ladite deuxième configuration, ladite tige (16) étant forcée, en position de repos qui correspond à ladite première configuration, en position relevée par un ressort (18) correspondant.

3. Siège (1) de taille variable selon la revendication 2, dans lequel la tige (16) a une extrémité supérieure (19) à laquelle est connecté un curseur (20) de fixation à balancement, qui est connecté à la face inférieure de la plaque d'appui (12).

4. Siège (1) de taille variable selon l'une quelconque des revendications précédentes, dans lequel le mécanisme de positionnement (7) comprend des moyens élastiques de rappel des parties arrière (5) et avant (6) dans les positions respectives correspondant à ladite première configuration lorsque la charge pesant sur ladite partie arrière (5) cesse.

5. Siège (1) de taille variable selon l'une quelconque des revendications précédentes, dans lequel le mécanisme de positionnement (7) comprend un dispositif de verrouillage et de libération de la partie avant (6) de la partie d'assise (4) en position verticale qui correspond à ladite première configuration, empêchant ainsi la partie avant (6) d'osciller librement lorsque le siège n'est pas occupé.

6. Siège (1) de taille variable selon les revendications 3 et 5, dans lequel lesdits un ou plusieurs leviers comprennent un premier levier (21) connecté audit curseur (20) de fixation ayant une rainure (24) longitudinale, et un deuxième levier (22) comprenant une extrémité distale (25) de butée et qui est relié par charnière audit premier levier (21) au moyen d'un axe coulissant (23) qui est mobile à l'intérieur de ladite rainure (24), de sorte que la chute du curseur (20) détermine l'abaissement du premier levier (21) et le coulissement de l'axe coulissant (23) dans la rainure (24) jusqu'à ce qu'il atteigne une extrémité de course supérieure de la rainure (24), et l'abaissement ultérieur du curseur (20) provoque la rotation du deuxième levier (22) en faisant passer ladite extrémité distale (25) vers le haut d'une première position dans laquelle elle repose sur un bord de la plaque basculante (13) à une deuxième position dans laquelle la plaque basculante (13) est libre de tourner, le deuxième levier (22) constituant ledit dispositif de verrouillage et de libération de la partie avant (6) de la partie d'assise (4).

7. Siège (1) de taille variable selon la revendication 6, dans lequel ledit deuxième levier (22) est relié par charnière à un axe de charnière (26) connecté à la plaque de support (11).

8. Siège (1) de taille variable selon l'une quelconque des revendications précédentes, dans lequel le mécanisme de positionnement (7) comprend un dispositif retardateur qui ralentit la course des parties arrière (5) et avant (6) de la partie d'assise dans les deux directions.

9. Siège (1) de taille variable selon l'une quelconque des revendications précédentes, dans lequel deux bras de support (27) respectifs font saillie à partir des extrémités latérales de l'élément de support (11) et sont formés d'un seul tenant avec celui-ci ; ayant des extrémités distales (28) respectives connectées au cadre de support (3) au niveau d'une poutre horizontale (8) de celui-ci, de manière à déterminer la position de la plaque de support (11).

10. Siège (1) de taille variable selon les revendications 3, 8 et 9, dans lequel la poutre horizontale (8) a une section circulaire, dans lequel la plaque basculante (13) a une paire de supports en saillie (32) faisant saillie à partir d'une face inférieure de celle-ci qui sont connectés rotatifs à une charnière (33) fixe, et dans lequel le mécanisme de positionnement (7) comprend à chaque bras (27) :
• un premier collier (29), sur lequel est articulé un levier (31), connecté à la plaque basculante (13), qui comprend un ressort de torsion (34) dont l'extrémité distale (36) se trouve sur ce levier (31) ; et
• un deuxième collier (30) qui est constitué d'une paire de douilles concentriques coulissantes de manière à constituer le dispositif retardateur du mécanisme de positionnement (7), une desdites douille étant connectée au curseur (20) de fixation.

11. Siège (1) de taille variable selon la revendication 10, dans lequel la douille connectée au curseur (20) de fixation est articulée au moyen d'un levier supplémentaire (37), de sorte que ce levier supplémentaire (37) soit agencé pour faire tourner et pousser vers le haut, au niveau de ses extrémités latérales, la plaque basculante (13).
